# EUROPEAN PATENT APPLICATION

(11) **EP 0 926 588 A2**
(43) Date of publication of application: **30.06.1999**
(21) Application number: 98121967.8
(22) Date of filing: 19.11.1998
(51) Int. Cl.: G06F 3/16

(54) **Information processing apparatus, information processing method, and storage medium containing a program for controlling information processing apparatus**

(30) Priority: 24.12.1997 JP 35509197
(71) Applicant: Sharp Kabushiki Kaisha, Osaka-shi, Osaka 545-8522 (JP)
(72) Inventor: Tanaka, Iwao, Yamatokoriyama-shi, Nara 639-1103 (JP)
(74) Representative: MÜLLER & HOFFMANN Patentanwälte

(57) **Abstract**

An information processing apparatus includes: a command table for pre-storing data processing commands obtained by matrix-form combination of trace commands and voice commands; a display section for displaying on a screen an object data to be processed by the data processing commands, the display section having a tablet on the screen; a coordinate input section for inputting a coordinate data into the tablet; a trace recognition section for recognizing the input coordinate data to extract a trace command; a voice input section for inputting a voice data before or after the coordinate data is input; a voice recognition section for recognizing the input voice data to extract a voice command; a determining section for determining a data processing command corresponding to the extracted trace command and the extracted voice command by means of the command table; and a data processing section for processing the object data based on the data processing command that has been read out.

## Description

### BACKGROUND OF THE INVENTION

### 1. Field of the Invention

The present invention relates to an information processing apparatus, an information processing method, and a storage medium containing a program for controlling the information processing apparatus, and more particularly to an information processing apparatus and method that are applied to a personal computer or a word processor for processing input data and input commands by interrelating a pen input and a voice input, and a storage medium containing a program for controlling the information processing apparatus.

### 2. Description of the Related Art

Hitherto, a pen input process and a voice input process are carried out separately in an information process such as text editing, graphics editing, and information retrieving. Namely, in the pen input process, an input command process only for a pen is carried out, whereas in the voice input process, an input command process only for a voice is carried out. However, in accordance with the recent development of voice recognition technique, a multiple input method for example is now proposed in which the input command processes are carried out using pen inputs and voice inputs in combination.

For example, according to the disclosure of Japanese Unexamined Patent Publication No. HEI 06(1994)-89158, a multiple-form information input method for voice input and pen input is proposed in which, while an object on a display screen is being pointed at with a pen, the position and the number of pointings are determined in accordance with the instruction of the voice input, and the number of instruction content items of the instruction is reduced in accordance with the number of pointings, thereby increasing the accuracy of voice recognition and the processing speed.

Also, according to the disclosure of Japanese Unexamined Patent Publication No. HEI 06(1994)-131108, an information input device for voice input and pen input is proposed in which, when an instruction with a pen and an instruction with voice are given at the same time, the one having a higher recognizability is adopted, or in which data are input with voice and an editing command such as insertion or deletion is input by means of gesture with a pen.

Also, according to the disclosure of Japanese Unexamined Patent Publication No. HEI 06(1994)-131437, a multiple-form operation instruction method for voice input and pen input is proposed in which an instruction is given by voice on an object of pen input and, while recognizing the contents of the instruction of the pointing in accordance with the contents of the instruction, an operation on the object is carried out in accordance with the contents of the instruction by pointing and the contents of the instruction by voice.

Also, according to the disclosure of Japanese Unexamined Patent Publication No. HEI 06(1994)-332660, an information processing apparatus for voice input and pen input is proposed in which, when an object that has been subjected to a pointing operation is detected, a process intended by the user is carried out based on the result of voice recognition obtained by voice input before or after the pointing operation.

Also, according to the disclosure of Japanese Unexamined Patent Publication No. HEI 07(1995)-5977, a multiple-form object indication method for voice input and pen input is proposed in which one of a plurality of display objects is specified as an object from the objects indicated by the pointing operation, according to the contents of the voice.

However, the prior art disclosed in the above-mentioned documents is directed to the methods and apparatus in which an input processing is carried out in a form of "object (A group) + verb (B group)" by combining an object indication (A) and an operation indication (B) by voice with an object indication (A') and an operation indication (B') by a pointing device to carry out the indicated operations (B + B') on the indicated objects (A + A'). According to these methods and apparatus, a more facilitated input system is constructed by heightening the recognizability of indication commands in the A group and in the B group. However, since there is no variation of operation contents by a combination of the A group and the B group, it is not possible to change the input commands, so that the operability in various information processing has not been sufficiently improved.

### SUMMARY OF THE INVENTION

The present invention has been made in view of these circumstances and the purpose thereof is to provide an information processing apparatus, an information processing method, and a storage medium containing a program for controlling the information processing apparatus, in which the information processing operations having a variation can be simplified, for example, by processing the object data using a pre-stored command table on the basis of data processing commands obtained by matrix-form combination of trace commands input by a pointing device and voice commands input by a microphone.

Accordingly, the present invention provides an information processing apparatus comprising: a command table for pre-storing data processing commands obtained by matrix-form combination of trace commands and voice commands; a display section for displaying on a screen an object data to be processed by the data processing commands, the display section having a tablet on the screen; a coordinate input section for inputting a coordinate data into the tablet; a trace recognition section for recognizing the input coordinate data to extract a trace command; a voice input section for inputting a voice data before or after the coordinate data is input; a voice recognition section for recognizing the input voice data to extract a voice command; a determining section for determining a data processing command corresponding to the extracted trace command and the extracted voice command by means of the command table; and a data processing section for processing the object data based on the data processing command that has been read out.

### BRIEF DESCRIPTION OF THE DRAWINGS

The present invention will be better understood from the following detailed description of preferred embodiments of the invention, taken in conjunction with the accompanying drawings, in which:
Fig. 1 is a block diagram showing an overall construction of an information processing apparatus according to an embodiment of the present invention;
Fig. 2 is a main flowchart showing a data processing procedure in the information processing apparatus according to the embodiment of the present invention;
Fig. 3 is a sub flowchart showing a procedure (1) for determining a data processing command according to the embodiment of the present invention;
Fig. 4 is a sub flowchart showing a procedure (2) for determining a data processing command according to the embodiment of the present invention;
Fig. 5 is an explanatory view showing a data processing procedure and a state (1) of a display screen according to the embodiment of the present invention;
Fig. 6 is an explanatory view showing a state of the display screen of an object data to be transferred according to the embodiment of the present invention;
Fig. 7 is an explanatory view showing a data processing procedure and a state (2) of the display screen according to the embodiment of the present invention;
Fig. 8 is an explanatory view showing a data processing procedure and a state (3) of the display screen according to the embodiment of the present invention;
Fig. 9 is a view showing a command matrix table (1) according to the embodiment of the present invention;
Fig. 10 is a view showing a command matrix table (2) according to the embodiment of the present invention;
Fig. 11 is a view showing sequences (1) to be stored in a register of a storage section during preparation of a data processing command according to the embodiment of the present invention; and
Fig. 12 is a view showing sequences (2) to be stored in a register of a storage section during preparation of a data processing command according to the embodiment of the present invention.

### DETAILED DESCRIPTION OF THE PREFERRED EMBODIMENTS

In the present invention, a command table, a trace recognition section, a voice recognition section, a determining section, and a data processing section are preferably composed of a microcomputer including a CPU, a ROM, a RAM, and an I/O port. Particularly, the command table may be composed of a ROM among these constituent elements. The trace recognition section includes a ROM area that stores data for recognizing a coordinate data to extract a trace command. The voice recognition section includes a ROM area that stores data for recognizing a voice data to extract a voice command.

A display section is preferably composed of an LCD (Liquid Crystal Display) or a PD (Plasma Display). A coordinate input section is preferably composed of a pointing device such as a pen or a mouse. A voice input section is preferably composed of a microphone.

According to the present invention, the information processing operations having a variation can be simplified because the object data can be processed using a pre-stored command table on the basis of data processing commands obtained by matrix-form combination of trace commands input by a pointing device and voice commands input by a microphone.

The trace commands are preferably composed of gesture commands. According to this construction, the object data can be processed by more intuitive and familiar operations because instructions based on gestures are used as the trace commands of the pointing device.

The trace commands preferably include position-designating commands for designating a position of the object data. According to this construction, the object data can be processed by designating the position of the object data simply by one pointing operation with the pointing device.

The voice commands preferably include voice information that shows a pronoun, a direction, or a processing order. According to this construction, the object data can be processed by inputting a voice command including simple voice information such as "this", "right", or "next".

The command table preferably stores data processing commands that vary depending on a state of input timing of the trace command and input timing of the voice command. According to this construction, the object data can be processed by selecting a command from a wider range of data processing commands without increasing the number of trace commands and voice commands.

According to another aspect of the present invention, an information processing method is provided which includes the steps of: pre-storing data processing commands obtained by matrix-form combination of trace commands and voice commands in a command table; displaying on a screen of a display section an object data to be processed by the data processing commands; inputting a coordinate data into a tablet disposed in the display section by using a coordinate input section; recognizing the input coordinate data to extract a trace command; inputting a voice data by using a voice input section before or after the coordinate data is input; recognizing the input voice data to extract a voice command; determining a data processing command corresponding to the extracted trace command and the extracted voice command by means of the command table; and processing the object data based on the data processing command.

According to still another aspect of the present invention, a recording medium containing a program for controlling an information processing apparatus is provided, in which the program performs the functions of: causing a computer operation to pre-store data processing commands obtained by matrix-form combination of trace commands and voice commands in a command table; causing a computer operation to display on a screen of a display section an object data to be processed by the data processing commands; causing a computer operation to input a coordinate data into a tablet disposed in the display section by using a coordinate input section; causing a computer operation to recognize the input coordinate data to extract a trace command; causing a computer operation to input a voice data by using a voice input section before or after the coordinate data is input; causing a computer operation to recognize the input voice data to extract a voice command; causing a computer operation to determine a data processing command corresponding to the extracted trace command and the extracted voice command by means of the command table; and causing a computer operation to process the object data based on the data processing command.

### EMBODIMENTS

The present invention will be detailed hereafter by way of embodiments taken in conjunction with the attached drawings. However, these embodiments and drawings are not intended to limit the scope of the present invention.

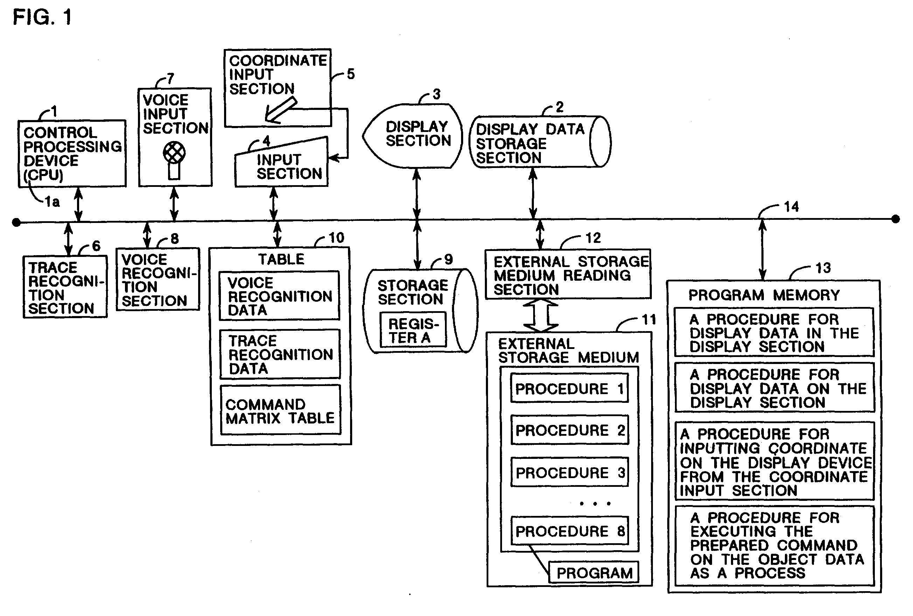

Fig. 1 is a block diagram showing an overall construction of an information processing apparatus according to an embodiment of the present invention. Referring to Fig. 1, a central processing device 1 includes a microcomputer composed of a CPU, a ROM, a RAM, and an I/O port. The central processing unit 1 controls each section using a control program stored in the ROM.

A display data storage section 2 includes a RAM and an EEPROM and stores a display data to be displayed on a screen of the display section. A display section 3 includes a display device such as a CRT display, an LCD (Liquid Crystal Display), or a PD (Plasma Display), and displays a display data stored in the display data storage section 2.

An input section 4 includes an input device or a communication device. The input device is composed of a pointing device, a keyboard, a scanner, an input data conversion circuit, and the like. The pointing device is composed of a transparent tablet, a mouse, a track pad, or the like. Especially, the transparent tablet is formed on the screen of the display section 3.

A coordinate input section 5 includes a pointing device which may be a pen. The coordinate input section 5 inputs an indication of a position on the screen or an indication of editing or correcting the input data by pointing on a tablet formed in the display section 3. A trace recognition section 6 includes a trace recognition program and a CPU. The trace recognition section 6 recognizes a trace data by comparing the coordinate data input by the coordinate input section 5 with the trace recognition data stored in the table and extracts the recognized trace data.

A voice input section 7 includes a microphone and an A/D conversion circuit. The voice input section 7 inputs a voice data from the microphone before or after the coordinate data is input on the screen by the coordinate input section 5.

A voice recognition section 8 includes a voice recognition program and a CPU. The voice recognition section 8 recognizes a voice command by comparing the voice data input by the voice input section 7 with the voice recognition commands stored in the table and extracts the recognized voice command.

A storage section 9 includes a RAM, an EEPROM, a floppy disk, a hard disk, or the like. The storage section 9 stores coordinate data/trace data and gesture commands obtained by the coordinate input section 5, voice data and voice commands recognized by the voice recognition section 8, values in the register showing the input state of voice commands and gesture commands, data of documents and drawings input by the input section for editing, the editing history of the data to be edited, and the like.

A table 10 includes a ROM and stores trace recognition data by which the trace recognition section 6 compares the coordinate data input from the coordinate input section 5 with the trace commands (including the gesture commands, the position-designating commands, and the like), voice recognition data by which the voice recognition section 8 compares the voice data input from the voice input section 7 with the voice commands, and command tables (command matrix tables (1) and (2)) for processing the object data on the basis of the data processing commands obtained by matrix-form combination of voice commands and trace commands.

An external storage medium 11 includes a memory card made of an EEPROM, a CD-ROM, an MD, or the like and stores a control program by which the CPU of the central processing device 1 controls each section.

An external storage medium reading section 12 includes an external storage medium driving device, an interface, and the like. The external storage medium reading section 12 reads a control program stored in the eternal storage medium 11 and installs it into a program memory or into a RAM of the central processing device 1 by the control of the CPU of the central processing device 1.

A program memory 13 includes an EEPROM, a floppy disk or the like and stores the control program data of the external storage medium 11 read from the external storage medium reading section 12. The reference numeral 14 represents a bus for transferring the data/addresses. The central processing device 1 controls each section via the bus 14.

Here, although the table 10 already stores the voice recognition data, the trace recognition data, and each data of the command matrix table, each of the data may be supplied from outside and then stored in the storage section 9. In the latter case, it is sufficient to switch the memory address, which is issued from the central processing device 1, from the table 10 to the storage section 9.

The external storage medium 11 stores a control program including (1) a procedure for storing the display data into the display data storage section 2, (2) a procedure for displaying the stored display data on the display section 3, (3) a procedure for inputting coordinate data from the coordinate input section 5 onto the tablet of the display section 3, (4) a procedure for recognizing the coordinate data to extract a trace command, (5) a procedure for inputting voice data from the voice input section 7, (6) a procedure for recognizing the voice data to extract a voice command, (7) a procedure for reading from the command matrix table a data processing command for the object data on the basis of the combination of the trace command and the voice command, and (8) a procedure for processing the object data on the basis of the data processing command that has been read out.

In other words, the external storage medium 11 stores a program for controlling an information processing apparatus, in which the program performs the functions of: causing a computer operation to pre-store data processing commands obtained by matrix-form combination of trace commands and voice commands in a command table 10; causing a computer operation to display on a screen of a display section 3 an object data to be processed by the data processing commands; causing a computer operation to input a coordinate data into a tablet disposed in the display section 3 by using a coordinate input section 5; causing a computer operation to recognize the input coordinate data to extract a trace command; causing a computer operation to input a voice data by using a voice input section 7 before or after the coordinate data is input; causing a computer operation to recognize the input voice data to extract a voice command; causing a computer operation to determine a data processing command corresponding to the extracted trace command and the extracted voice command by means of the command table 10; and causing a computer operation to process the object data based on the data processing command.

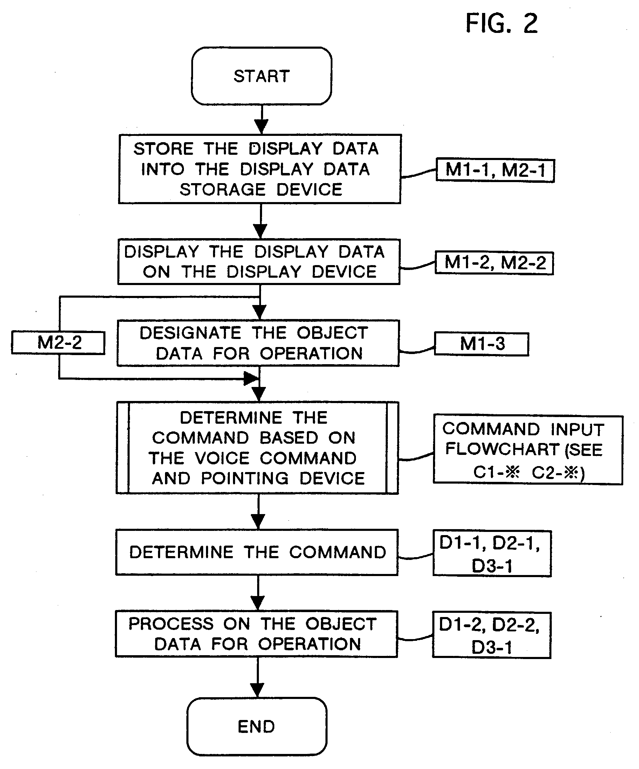

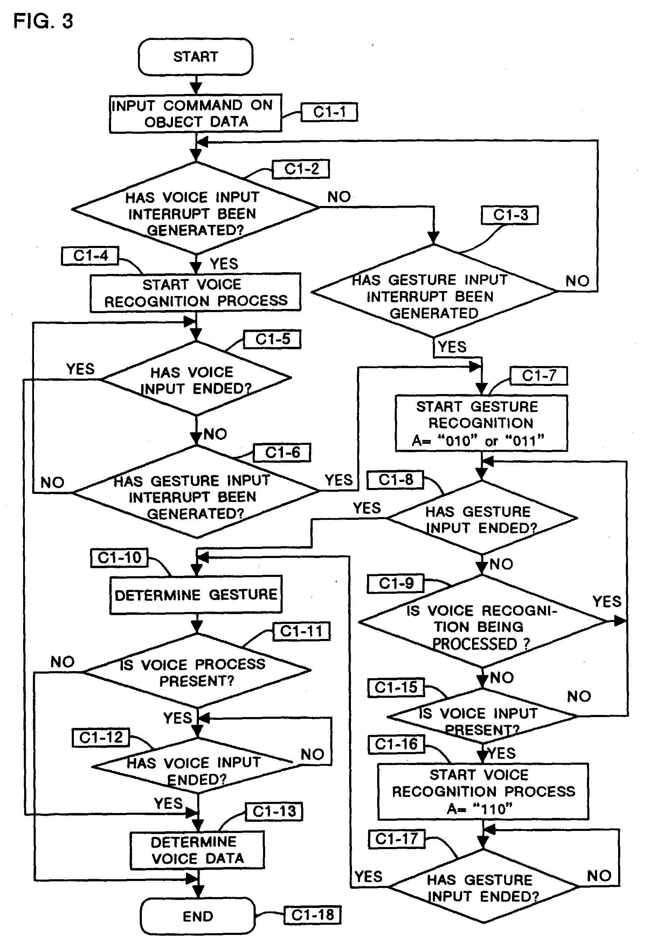

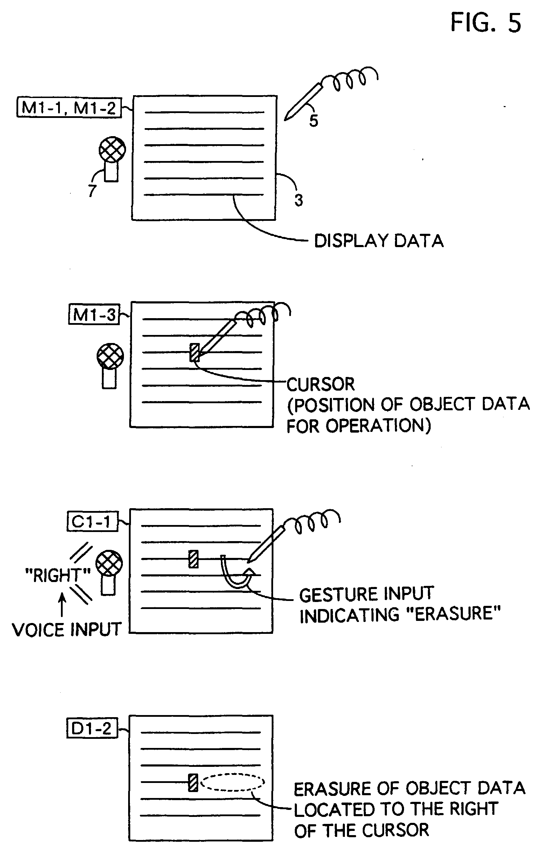

Fig. 2 shows a main flowchart showing a procedure for data processing in the information processing apparatus according to the embodiment of the present invention. Fig. 3 is a sub flowchart showing a procedure (1) for determining a data processing command according to the embodiment of the present invention. Fig. 5 is an explanatory view showing a data processing procedure and a state (1) of the display screen according to the embodiment of the present invention. The step numbers in Fig. 5 correspond to those appearing in Figs. 2 and 3.

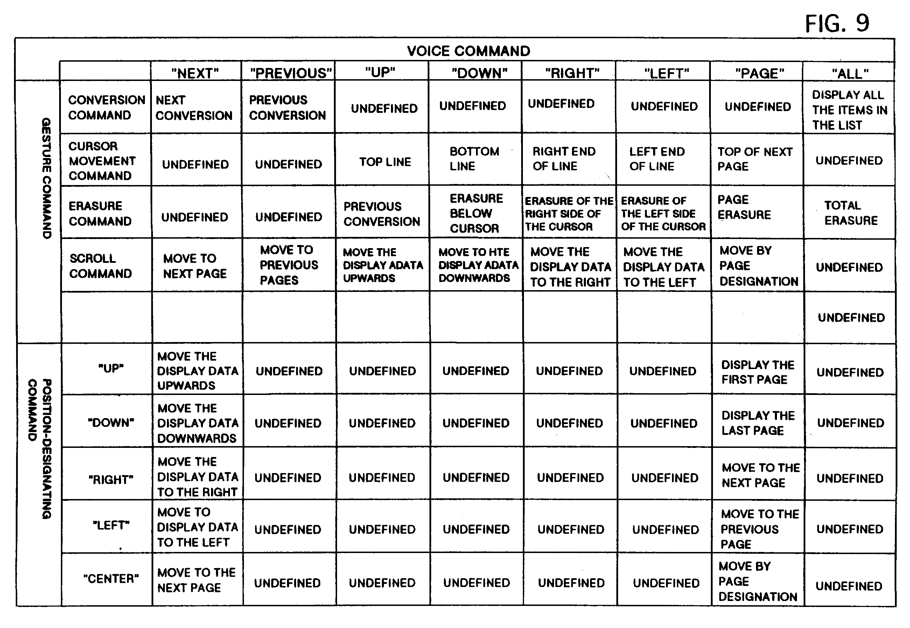

Fig. 9 is a view showing a command matrix table (1) according to the embodiment of the present invention. Referring to Fig. 9, the command table stores, as a command matrix table, the data processing commands each performing data processing on the object data when a gesture command and a voice command are input at the same time. Here, the data processing commands are stored in framed portions with 4 rows of gesture commands and 8 columns of voice commands.

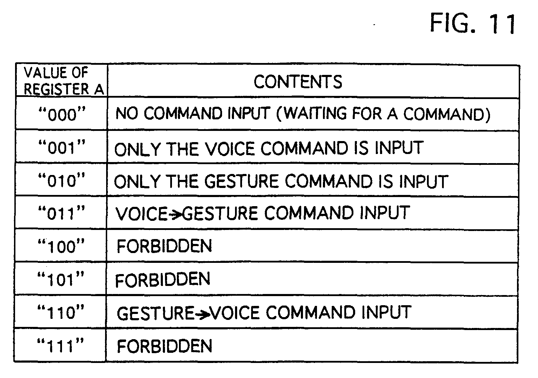

Fig. 11 is a view showing sequences (1) to be stored in a register of a storage section during preparation of a data processing command according to the embodiment of the present invention. Referring to Fig. 11, the register of the storage section stores the sequences (input procedures) as determined by the bit value of the register A when a gesture command and a voice command are input at the same time.

### [Example 1]

A detailed explanation of the present invention will be given by way of Example 1 with reference to the flowcharts shown in Figs. 2 and 3 and Figs. 5, 9, and 11.

In Fig. 2,

Step M1-1 : With respect to the document data to be edited in the storage section 9, the central processing device 1 prepares a display data corresponding to the document data and stores it in the display data storage section 2.

Step M1-2 : The display section 3 displays on the screen the display data stored in the display data storage section 2. The reference symbol M1-2 in Fig. 5 represents the display data displayed on the screen of the display section 3. Here, as an example, a portion of "document data in a document file" is taken up as the object data for operation.

Step M1-3 : On seeing the display data displayed on the screen of the display section 3, the operator designates an object data for operation in the storage section 2, for example, a data file, a data in the data file, a name portion of the data file or the like by means of the coordinate input section 5 or the input section 4.

The reference symbol M1-3 in Fig. 5 shows a state in which the object data for operation is designated by means of the input section 4, wherein the cursor position on the screen of the display section 3 indicates the object data portion designated by the input section 4. Next, the process goes to the step C1-1 in the sub flowchart of Fig. 3.

Step C1-1 : With respect to the designated object data for operation, the operator inputs instructions in a voice and in a trace (hereafter referred to as "gesture") using a pointing device such as a pen. For example, the operator pronounces a word "right" as the instruction by voice, and inputs a gesture indicating "erasure" using the pointing device.

When a voice command or a gesture is input, an interrupt signal is issued by the voice recognition section 8 or the coordinate input section 5 to inform the central processing device 1 of the input. At this time, the contents of the instructions have not been recognized yet by the central processing device 1.

The reference symbol C1-1 in Fig. 5 represents a state in which a command on the designated object data for operation has been given by an input of the voice and an input of the trace with the pointing device.

Step C1-2 : When the central processing device 1 detects the interrupt signal from the voice recognition section 8, the process goes to the step C1-4. Otherwise, the process goes to the step C1-3.

Step C1-3 : When the central processing device 1 detects the interrupt signal from the coordinate input section 5, the process goes to the step C1-7. Otherwise, the process returns to the step C1-2 (where the bit value in the register A is "000").

Step C1-4 : The central processing device 1 instructs the voice recognition section 8 to recognize the input voice data, whereby the voice recognition section 8 successively recognizes the input voice data and sets the bit value of the register A to be "001". After the recognition process is ended, an interrupt signal indicating the end of the process is issued to the central processing device 1.

Steps C1-5, 6 : When the central processing device 1 detects an interrupt signal indicating an instruction input by gesture before the recognition of the voice data is ended, the process goes to the step C1-7. On the other hand, when the central processing device 1 detects an interrupt signal indicating the end of the voice data recognition without receiving the instruction input by gesture, the process goes to the step C1-13.

Step C1-7 : The central processing device 1 instructs the trace recognition section 6 to recognize the input trace data (gesture), whereby the trace recognition section 6 successively recognizes the input gesture. Also, the central processing device 1 sets the bit value of the register A to be "011" if the former bit value is "001", and sets the bit value to be "010" if the former bit value is "000". After the recognition process is ended, an interrupt signal indicating the end of the process is issued to the central processing device 1.

Step C1-8 : When the central processing device 1 detects an interrupt signal indicating the end of gesture recognition, the process goes to the step C1-10. If the interrupt signal is not detected, the process goes to the step C1-9.

Step C1-9 : The central processing device 1 recognizes the bit value of the register A. If the bit value is "011", the process returns to the step C1-8 ("011" shows that the voice recognition section 8 has already started processing). If the bit value is "010", the process goes to the step C1-15 ("010" shows that the voice recognition section 8 has not started processing yet).

Step C1-15 : When the central processing device 1 detects an interrupt signal of instruction input by voice, the process goes to the step C1-16. If the interrupt signal is not detected, the process goes to the step C1-8.

Step C1-16 : The central processing device 1 instructs the voice recognition section 8 to recognize the input voice data, whereby the voice recognition section 8 successively recognizes the input voice data, and the central processing device 1 sets the bit value of the register A to be "110". After the recognition process is ended, an interrupt signal indicating the end of the process is issued to the central processing device 1.

Step C1-17 : When the central processing device 1 detects an interrupt signal indicating the end of gesture recognition from the trace recognition section 6, the process returns to the step C1-10. If the interrupt signal is not detected, the process returns to the step C1-17.

Step C1-10 : After the recognition of the gesture is ended, the trace recognition section 7 stores in the storage section 9 the command indicated by the gesture that has been determined by the recognition.

Step C1-11 : The central processing device 1 confirms the bit value of the register A. If the bit value is "011" or "110" (indicating that the voice recognition section 8 has already started processing), the process goes to the step C1-12. If the bit value is "010" (indicating that the voice recognition section 8 has not started processing yet), the process goes to the step C1-18 to end the command input process.

Step C1-12 : When the central processing device 1 detects an interrupt signal indicating the end of voice data recognition, the process goes to the step C1-13. If the interrupt signal is not detected (the voice data recognition process is still being carried out), the process stays at the step C1-12 to wait for the end of input.

Step C1-13 : After the voice data recognition is ended, the voice recognition section 8 stores in the storage section 9 the command indicated by the voice data that has been determined by the recognition, and the process goes to the step C1-18 to end the command input process. Then, the process returns to the step D1-1 in the main flowchart of Fig. 2.

Step D1-1 : The central processing device 1 determines a corresponding process using the command matrix table in the table 10 based on the command by voice, the command by gesture, and the value of the register A determined in the step C1-18 of Fig. 3.

Step D1-2 : The central processing 1 carries out the process, as determined in the step D1-1, on the object data.

The reference symbol D1-2 of Fig. 5 shows a state in which the object data for operation, i.e. the data displayed on the right side of the cursor position, is erased in accordance with the process designated in the step D1-1.

In this Example, the gesture command is an "erasure command", and the voice command is "right". Therefore, from the command matrix table (1) of Fig. 9, it is found that the process corresponding to this pair of commands is "cursor right erasure", which means that the data processing to be executed is the erasure of the entire displayed data on the right side of the cursor position.

Through these processes, the information processing operations having a variation can be simplified because the object data can be processed by determining a data processing command using a command table (command matrix table (1)) by recognizing a gesture command input by a pointing device and a voice command input by a microphone.

Further, since the trace commands given by a pointing device include gesture commands, the object data can be processed by more intuitive and familiar operations.

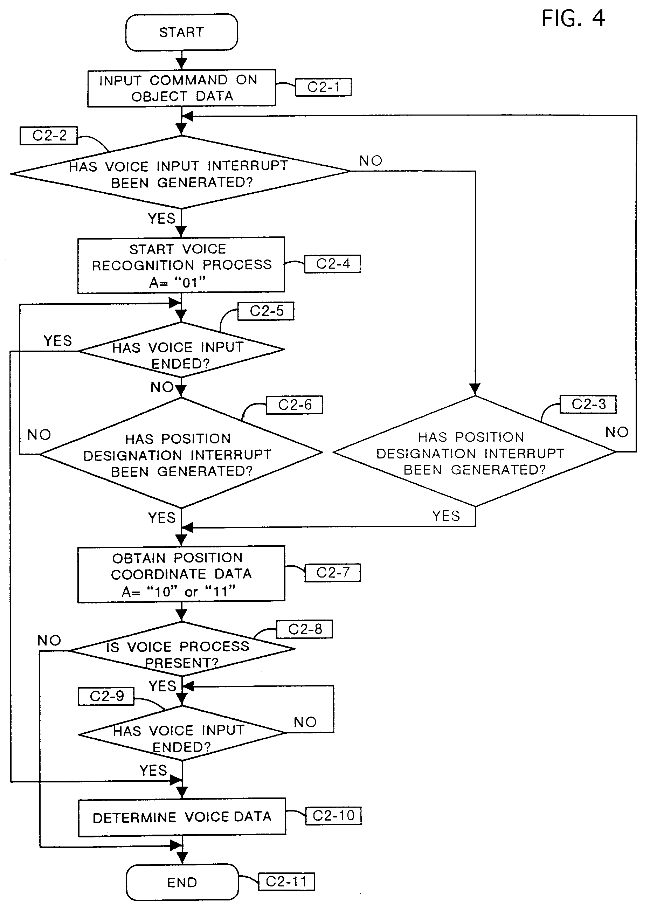

Fig. 4 is a sub flowchart showing a procedure (2) for determining a data processing command according to this embodiment.

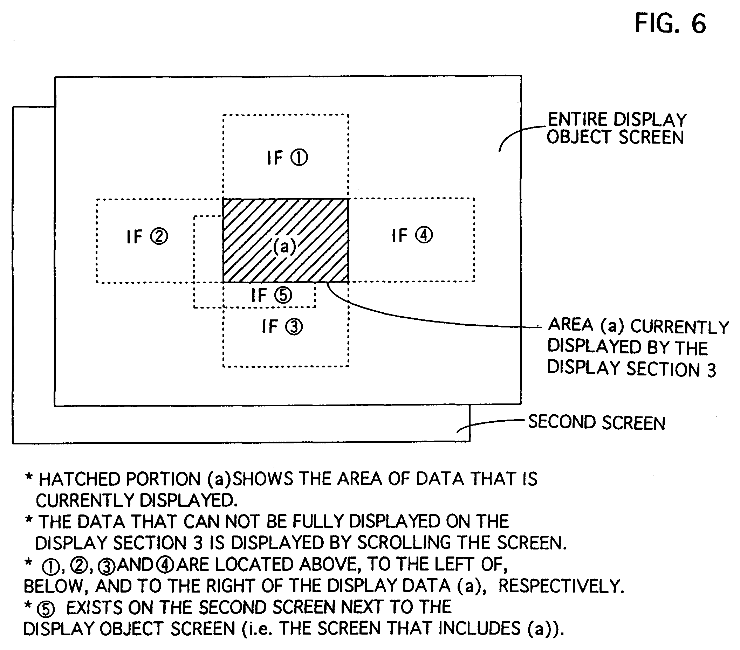

Fig. 6 is an explanatory view showing a state of the display screen of an object data to be transferred according to this embodiment. Referring to Fig. 6, a hatched area (a) shows the display data that is currently displayed. The display data that is not currently displayed can be displayed by scrolling.

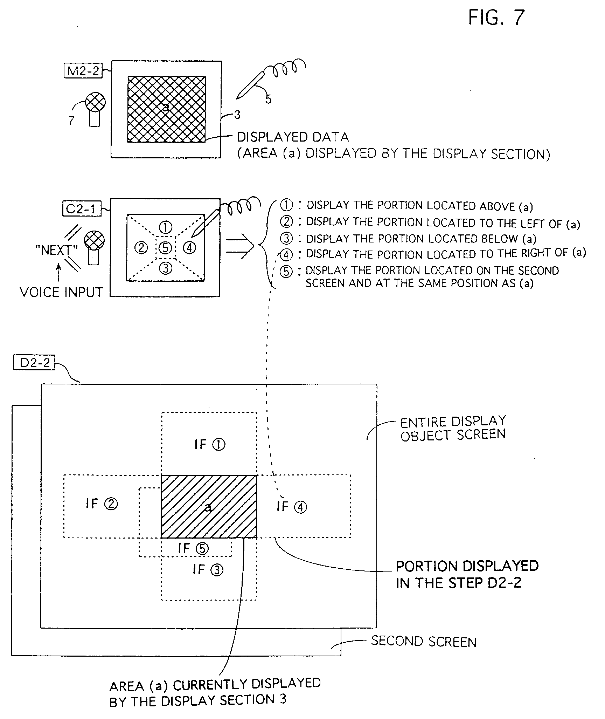

Fig. 7 is an explanatory view showing a data processing procedure and a state (2) of the display screen according to this embodiment. In Fig. 7, the step numbers correspond to those appearing in Figs. 2 and 4.

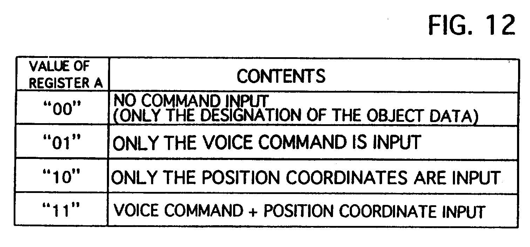

Fig. 12 is a view showing sequences (2) to be stored in the register of the storage section during preparation of the data processing command according to this embodiment. In Fig. 12, the register in the storage section stores sequences (input procedures) determined according to the bit values in the register A when a position-designating command and a voice command are input at the same time.

### [Example 2]

The present invention will be explained by way of Example 2 with reference to the flowcharts shown in Figs. 2 and 4 and Figs. 5 to 7, 9, and 12.

In Fig. 2,

Step M2-1 : With respect to the document data to be edited in the storage section 9, the central processing device 1 prepares a display data corresponding to the document data and stores it in the display data storage section 2.

Step M2-2 : The display section 3 displays on the screen the display data stored in the display data storage section 2. The reference symbol M1-1 in Fig. 5 shows a state in which the display data is displayed on the display section 3. In this embodiment, an explanation will be given on a case in which the display section 3 displays only a portion of the document data instead of displaying the whole document. The central mesh portion shown in Fig. 7 illustrates an area which is currently displayed on the display section. The procedure then goes to the step C2-1 in the sub flowchart of Fig, 4.

Step C2-1 : With respect to the designated object data for operation, the operator inputs an instruction by voice and an instruction by a pointing device such as a pen on the designation of the object data. For example, the operator pronounces a word "next" as an instruction by voice, and points at a right portion on the object data displayed on the display section 3 by a pointing device (C2-1 in Fig. 7).

When an input by voice and an input by the pointing device are received, an interrupt signal is issued from each of the voice recognition section 8 and the coordinate input section 5 to the central processing device 1. At this moment, the details of the instructions given by the inputs are not apparent.

Step C2-2 : If the central processing device 1 detects an interrupt signal from the voice recognition section 8, the procedure goes to the step C2-4. Otherwise, the procedure goes to the step C2-3.

Step C2-3 : If the central processing device 1 detects an interrupt signal from the coordinate input section 5, the procedure goes to the step C2-7. Otherwise, the procedure goes to the step C2-2.

Step C2-4 : The central processing device 1 instructs the voice recognition section 8 to carry out the recognition of the input voice data, whereby the voice recognition section 8 successively recognizes the input voice data and sets the value of the register A to be "01" (See Fig. 12). When the recognition process is ended, an interrupt signal showing the end of the process is issued to the central processing device 1.

Steps C2-5, 6 : If the central processing device 1 detects an interrupt signal generated by the coordinate input on the object data from the coordinate input section 5 before the end of the recognition of the voice data, the procedure goes to the step C2-7. On the other hand, if the central processing device 1 detects an interrupt signal indicating the end of the recognition of the voice data without detecting an interrupt signal from the coordinate input section 5, the procedure goes to the step C2-10.

Step C2-7 : The central processing device 1 obtains the input coordinate data from the coordinate input section 5, and sets the bit value of the register A to be "11" if the former value is "01" and sets the bit value to be "10" if the former value is "00". When the process of obtaining the coordinate data is finished, an interrupt signal indicating the end of the process is issued to the central processing device 1.

Step C2-8 : If the central processing device 1 detects an interrupt signal indicating the end of obtaining the position coordinate data, the procedure goes to the step C2-9. If the interrupt signal is not detected, the procedure goes to the step C2-11.

Step C2-9 : If the central processing device 1 detects an interrupt signal indicating the end of the voice recognition from the voice recognition section 8, the procedure goes to the step C2-10. If the interrupt signal is not detected, the procedure stays at the step C2-9.

Step C2-10 : After the voice recognition is ended, the voice recognition section 8 stores in the storage section 9 the command indicated by the voice data that has been determined by the voice recognition. The procedure then returns to the step D2-1 in the main flowchart of Fig. 2.

Step D2-1 : Using the command matrix table in the table 10, the central processing device 1 determines a corresponding process in accordance with the command by voice, the command by the pointing device, and the bit value of the register A as determined in the step C2-10.

In this example, the command by the pointing device is "right", and the command by voice is "next". Therefore, from the command matrix table (1) of Fig. 9, it is found that the process corresponding to this pair of commands is to "move the display data to the right", so that the next process to be carried out is to "display the data located to the right of the currently displayed data."

Step D2-2 : The central processing device 1 carries out the process determined in the step D2-1 on the object data. In this example, the displayed data is a portion located on the right side of the mesh portion shown in Fig. 6, namely the portion labeled "If 4".

Through the above-mentioned steps, the object data can be processed by determining the data processing command using the command table (command matrix table (1)) on the basis of the recognition of the position-designating command input by the pointing device and the voice command input by the microphone. Accordingly, the information processing operations having a variation can be simplified.

Since the trace command includes a position-designating command that designates the position of the object data, the object data can be processed simply by designating the position with one pointing operation.

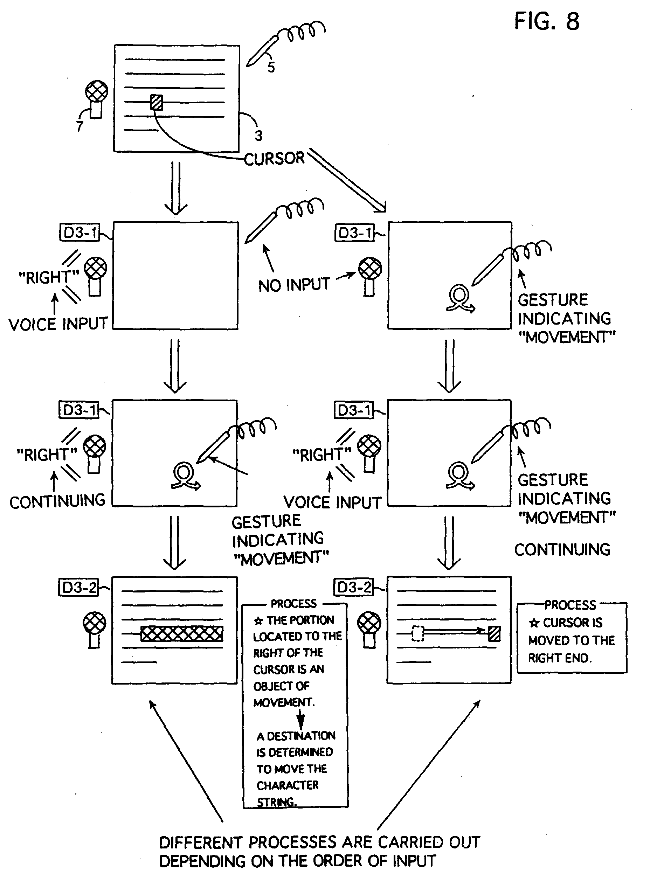

Fig. 8 is an explanatory view showing a data processing procedure and a state (3) of the display screen according to the embodiment of the present invention. In Fig. 8, the step numbers correspond to those appearing in Figs. 2 and 4.

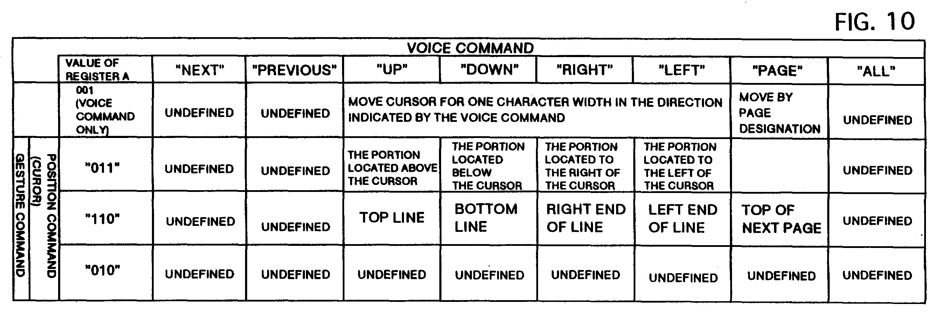

Fig. 10 is a view showing a command matrix table (2) according to the embodiment of the present invention. In this example, the data processing commands are stored in framed portions with 4 rows of "position-designating commands" and 8 columns of "voice commands", as shown in Fig. 10.

The case where only the gesture command is input : This corresponds to the bit value of "010" in the register A, and the data processing command is undefined.

The case where the voice command is input subsequent to the gesture command : This corresponds to the bit value of "010" in the register A, and the data processing commands shown in the command matrix table (2) are defined.

The case where the gesture command is input subsequent to the voice command : This corresponds to the bit value of "011" in the register A, and the data processing commands shown in the command matrix table (2) are defined.

### Example 3

The present invention will be explained by way of Example 3 with reference to the flowcharts shown in Figs. 2 and 4 and Figs. 8, 10, and 11. Here, the steps D1-1 and D1-2 in the Examples 1 and 2 are replaced with the steps D3-1 and D3-2 in the Example 3. Also, in this Example, it is assumed that the recognition results of the gesture command and the voice command in the Examples 1 and 2 are "to move" and "right", respectively.

Step D3-1 : Using the command matrix table in the table 10, the central processing device 1 determines a corresponding process in accordance with the command by voice, the command by gesture, and the bit value of the register A as determined in the step C1-18.

In the Example 3, the gesture command is "to move", and the voice command is "right". If the gesture command has been input during the input of the voice command, the bit value of the register A is "011". Therefore, from the command matrix table (2), it is found that the corresponding object data is a "portion located to the right of the cursor", and the process to be carried out is "to move the data (character string) located to the right of the cursor position". In this case, the destination to which the data is to be transferred is designated in the step D3-2.

On the other hand, if the voice command has been input during the input of the gesture command, the bit value of the register A is "110" or "111". Therefore, from the command matrix table (2), it is found that the corresponding object data is the "right end of the line", and the process to be carried out is to "move the cursor position to the right end of the line on which the cursor is currently located".

Step D3-2 : The central processing device 1 carries out the process determined in the step D3-1 on the object data. The step D3-2 in Fig. 8 shows a state in which the object data for operation, i.e. the data displayed to the right of the cursor position, has been erased in accordance with the process determined in the step D3-1.

Through the above-mentioned steps, the object data can be processed by determining the data processing command using the command table (command matrix table (2)) on the basis of the recognition of the movement instruction command input by the pointing device and the voice command input by the microphone. Accordingly, the information processing operations having a variation can be simplified.

The command table may store data processing commands that vary depending on a state of input timing of the trace command (movement instruction command) and input timing of the voice command. According to this construction, the object data can be processed by selecting a command from a wider range of data processing commands without increasing the number of trace commands and voice commands.

As shown above, according to the present invention, the information processing operations having a variation can be simplified by processing the object data using a command table that pre-stores data processing commands obtained by matrix-form combination of trace commands input by a pointing device and voice commands input by a microphone.

Although the present invention has fully been described by way of example with reference to the accompanying drawings, it is to be understood that various changes and modifications will be apparent to those skilled in the art. Therefore, unless otherwise such changes and modifications depart from the scope of the invention, they should be construed as being included therein.

## Claims

1. An information processing apparatus comprising:
a command table for pre-storing data processing commands obtained by matrix-form combination of trace commands and voice commands;
a display section for displaying on a screen an object data to be processed by the data processing commands, the display section having a tablet on the screen;
a coordinate input section for inputting a coordinate data into the tablet;
a trace recognition section for recognizing the input coordinate data to extract a trace command;
a voice input section for inputting a voice data before or after the coordinate data is input;
a voice recognition section for recognizing the input voice data to extract a voice command;
a determining section for determining a data processing command corresponding to the extracted trace command and the extracted voice command by means of the command table; and
a data processing section for processing the object data based on the data processing command that has been read out.

2. The information processing apparatus of claim 1, wherein the trace commands are gesture commands.

3. The information processing apparatus of claim 1, wherein the trace commands include position-designating commands for designating a position of the object data.

4. The information processing apparatus of claim 1, wherein the voice commands include voice information that shows a pronoun, a direction, or a processing order.

5. The information processing apparatus of claim 1, wherein the command table stores data processing commands that vary depending on a state of input timing of the trace command and input timing of the voice command.

6. An information processing method comprising the steps of:
pre-storing data processing commands obtained by matrix-form combination of trace commands and voice commands in a command table;
displaying on a screen of a display section an object data to be processed by the data processing commands;
inputting a coordinate data into a tablet disposed in the display section by using a coordinate input section;
recognizing the input coordinate data to extract a trace command;
inputting a voice data by using a voice input section before or after the coordinate data is input;
recognizing the input voice data to extract a voice command;
determining a data processing command corresponding to the extracted trace command and the extracted voice command by means of the command table; and
processing the object data based on the data processing command.

7. A recording medium containing a program for controlling an information processing apparatus, the program performing the functions of:
causing a computer operation to pre-store data processing commands obtained by matrix-form combination of trace commands and voice commands in a command table;
causing a computer operation to display on a screen of a display section an object data to be processed by the data processing commands;
causing a computer operation to input a coordinate data into a tablet disposed in the display section by using a coordinate input section;
causing a computer operation to recognize the input coordinate data to extract a trace command;
causing a computer operation to input a voice data by using a voice input section before or after the coordinate data is input;
causing a computer operation to recognize the input voice data to extract a voice command;
causing a computer operation to determine a data processing command corresponding to the extracted trace command and the extracted voice command by means of the command table; and
causing a computer operation to process the object data based on the data processing command.
